# EUROPEAN PATENT APPLICATION

(11) **EP 1 122 663 A2**
(43) Date of publication of application: **08.08.2001**
(21) Application number: 01102047.6
(22) Date of filing: 30.01.2001
(51) Int. Cl.: G06F 17/60

(54) **Merchandise data delivery system, delivery device and method**

(30) Priority: 31.01.2000 JP 2000021485
(71) Applicant: TOYOTA JIDOSHA KABUSHIKI KAISHA, Aichi-ken 471-8571 (JP)
(72) Inventor: Fujiwara, Yasuhisa, Toyota-shi, Aichi-ken, 471-8571 (JP)
(74) Representative: Leson, Thomas Johannes Alois, Dipl.-Ing.

(57) **Abstract**

A computer in a control center (10) is connected via a user terminal (12). Merchandise data contents of magazine articles supplied by publishers (28), etc. are stored in a server computer in the control center (10) and when a request for delivery of merchandise data contents is made from a terminal (12), the server computer duplicates the merchandise data contents stored and creates delivery data contents by adding user-specific data. Delivery data contents are stored in a directory (46) assigned for each user (member). When a user requests a download, the server computer reads out the delivery data contents stored in the member directory (46) and transmits it to a terminal (12). By this, merchandise data contents are securely distributed to users.

## Description

### BACKGROUND OF THE INVENTION

### 1. Field of Invention

The invention relates to technology for distributing merchandise data contents using computer networks.

### 2. Description of Related Art

In recent years, electronic commerce and online shopping have become possible resulting from advancements in computer technology and communications technology.

For example, in a computer system connected to the Internet, Web pages are transmitted from a server computer to each terminal using the worldwide web (WWW) and users display such Web pages with browser software and request merchandise and data contents they need. A Web page has a URL which indicates the location of the resources. When the user transmits such URLs to a server computer as needed, the server computer can transmit Web pages corresponding to the requested URLs to terminals. When the server computer receives a request from a terminal, it performs settlement of payment as necessary, distributes requested merchandise to users through a distribution center, etc. as appropriate, or it transmits requested data contents to users' terminals.

Data requested by users include data contents of books, magazine, news, or music. Some users may want to request back numbers or specific articles of magazines (for example, a user who wants to purchase a car may want to obtain magazine data content concerning the car expected to be purchased), where a strong demand for a quick and secure delivery of magazine articles or the like to the user are experienced.

In Japanese Patent Application Laid-Open No. HEI 9-259189, technology where such data contents as a table of contents from magazines are stored in a server computer, when a user orders articles of choice from this table of contents from the server computer, the ordered data contents will be transferred from the server computer to the computer of a book distributor, and then the ordered articles will be sent from the computer of the book distributor to the user through electronic mail.

However, in the technology disclosed on the above-mentioned No. HEI 9-259189, because book data contents ordered by a user are distributed through electronic mail, a user having no e-mail address can not use such a system. In addition, even if the user has an e-mail address, some may want to receive ordered book data contents at a terminal different from the one used for ordering, or others may want to receive ordered book data contents at an arbitrary time point different from that of the time for ordering. There is a problem of failing to meet the diversified demands of users. Furthermore, if the data contents of a plurality of books are ordered, some users may want to receive each piece of book data contents by a different terminal at a different time. In such a case, the time of delivery will need to be specified for each piece of data contents sent in e-mail and may cause the problem that the operation is still complicated for most of the users. This is because if book data contents will be transmitted from a book distributor using e-mail, it will be necessary for the book distributor side to know the e-mail addresses of the users. Some users may think it is undesirable that book distributors know their e-mail addresses and details of orders.

### SUMMARY OF THE INVENTION

The present invention has been proposed in view of the above mentioned problems of the foregoing technology. Therefore, it is an object of the invention to provide a system and method which can respond to the diversified demands of users and securely distribute merchandise data contents to users.

In order to achieve the above mentioned object, a preferred embodiment of the present invention is a system which uses a computer network connected by communication channel to distribute merchandise data contents and includes a first computer which stores the merchandise data contents in a memory thereof, and a second computer which requests the first computer to distribute the merchandise data contents. The first computer includes means for receiving a request from the second computer and for creating replicated data contents with respect to the concerned merchandise data contents, and means for assigning requester-specific data contents to the replicated data contents and for creating assigned data contents for delivery.

In addition, the system of the preferred embodiment as mentioned above may have means for transmitting the delivery data contents to the second computer.

Another preferred embodiment of the present invention is a delivery device, which transmits merchandise data contents according to a request from a terminal device connected to a communication network. This delivery device includes a first memory space for storing merchandise data contents, means for creating replicated data contents related to relevant merchandise data contents according to a request from the terminal device, means for assigning requester-specific data contents to the replicated data contents and for creating assigned data contents for delivery, and a second memory space for storing the assigned data contents for delivery.

Additionally, the delivery device of the preferred embodiment may have transmission means for reading out the delivery data contents from the memory space and transmitting the delivery data contents.

In a preferred embodiment of the present invention, a terminal device includes means for inputting data contents to specify the merchandise data contents and for inputting operator-specific data contents, means for transmitting the specifying data contents and operator-specific data contents to the first computer, means for displaying a delivery data contents list transmitted from the first computer and stored in a memory space specified by the operator-specific data contents, and means forselecting a desired one of the contents for delivery.

Further, this terminal device may ideally have means for outputting the delivery data contents.

As described above, in the present invention, when a request for delivery of merchandise data contents is made from a terminal connected to a communication line or network, a computer which stores merchandise data contents in the memory thereof does not immediately transmit merchandise data contents to a terminal from which a request is made. Before transmission, it rather duplicates the data contents and modifies the merchandise data contents by adding requester-specific data contents, and then stores the modified merchandise data contents in a memory space (or may be called a directory) assigned for the user. This memory space (or directory) is the area which a requester (user) can log into as necessary, such that a requester logs in at a time when he/she wishes to have merchandise data contents distributed and downloads delivery data contents, which are the duplicated and modified merchandise data contents, to the terminal. A memory space (directory) assigned for a requester can be logged in from any terminal at any time, allowing the requester (user) to obtain merchandise data contents freely. In addition, because requester-specific data contents are added to distributed merchandise data contents, illegal copying can be effectively prevented.

The merchandise data content is the information concerning products, such as book data contents, magazine data contents, news data contents, music data contents, etc., a user can obtain or purchase online.

### BRIEF DESCRIPTION OF THE DRAWINGS

Fig. 1 is a block diagram showing a merchandise data contents delivery system according to an embodiment;
Fig. 2 is a block diagram showing the structure of a server computer;
Fig. 3 is a block diagram showing the structure of a terminal;
Fig. 4 is a flowchart for overall processing according to the embodiment;
Fig. 5 shows a first screen display on which the delivery request is performed;
Fig. 6 shows a second screen display on which the delivery request is performed;
Fig. 7 shows a third screen display on which the delivery request is performed;
Fig. 8 is an explanatory view showing the book data contents formatting;
Fig. 9 is a flowchart for download processing;
Fig. 10 shows a display screen indicating the content of the member directory; and
Fig. 11 shows an example of the display screen indicating the delivered book data Contents.

### DETAILED DESCRIPTION OF PREFERRED EMBODIMENTS

Embodiments of the invention will now be explained with reference to the attached drawings.

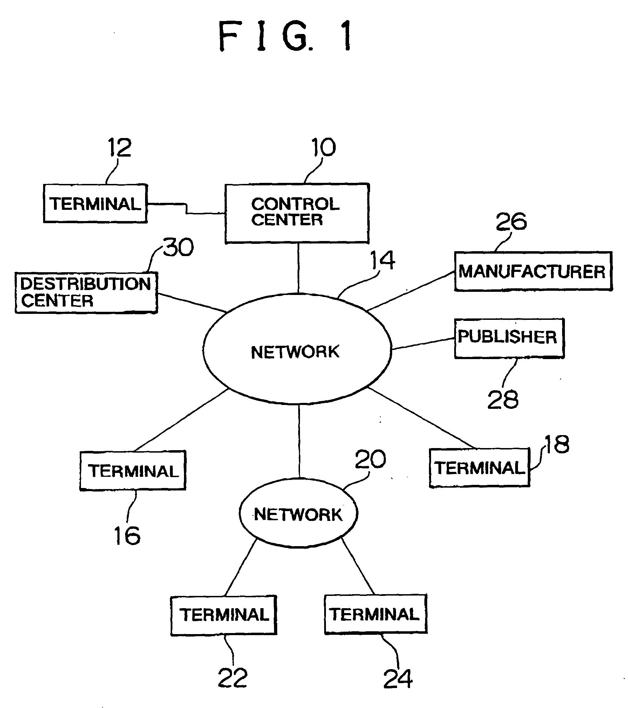

Fig. 1 is a block diagram showing a merchandise data contents delivery system according to this embodiment. A control center 10 having a server computer for storing merchandise data contents, such as book or magazine data, administers general control of the merchandise data contents delivery system. The control center 10 will be hereinafter appropriately referred to as the server computer 10. The server computer 10, which forms a first computer or delivery device, is connected to a user terminal 12 through a communication channel, for example, the Internet. The user may use the terminal 12 to send an order request for delivery of merchandise data contents to the server computer 10. The terminal 12, which is connected to the server computer 10 through the Internet, may be, for example, a personal computer individually owned by the user.

The server computer 10 may be connected to other terminals 16, 18 through one or more networks 14 or to another network 20, or to a computer system at a manufacturer 26 or publisher 28 participating in the merchandise data contents delivery system, or at a distribution center 30. The network 14 may be the Internet, but it may also be a network employing an exclusive channel (an intranet or extranet). The terminal 16 or terminal 18 may be an information terminal installed at the commercial location, for example, a convenience store, bank, bookstore, automotive dealership, etc., or it may be an information data terminal installed at a public area or public facility, such as a library, government building, post office, etc. The other network 20 may be connected to terminals 22, 24. The network 20 may be the network formed by the Internet or an exclusive channel. The terminal 22 or terminal 24 may be an exclusive terminal installed at a prescribed facility, for example, an automobile dealer, bookstore, music CD retailer or the like.

Thus, each of those terminals 12, 16, 18, 22, 24, forming a second computer, is connected to the server computer 10 through a network or individual communication line such that the order request for merchandise data contents delivery can be sent to the server computer 10 using any of those terminals. The merchandise data contents are supplied from the computer of the publisher 28 through the appropriate network 14 to the server computer 10. As a nonlimiting example, an exemplary embodiment of merchandise data can be book or magazine data, referred to simply as book data for simplicity. The book data contents may be supplied to the server computer 10 from the computer of the publisher 28 upon the request of the user. Book data contents recorded in a recording medium with a large storage capacity may be written into the server computer 10 as an alternative method using no network.

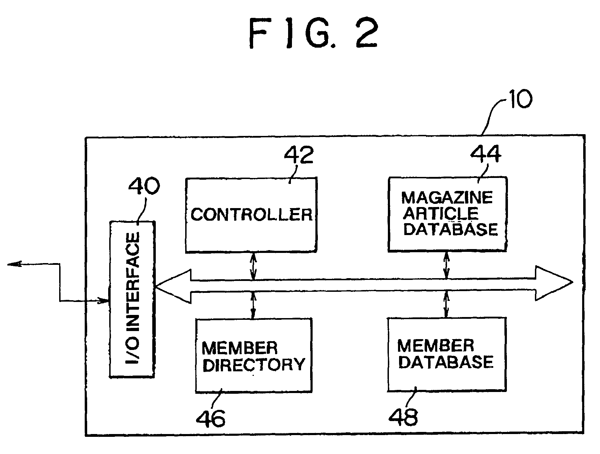

Fig. 2 is a block diagram showing the structure of the server computer 10. The server computer 10 is formed of an input/output (I/O interface) portion 40, a controller 42, a magazine article database 44, a member database 48 and a member directory 46. The magazine article database 44 stores book data contents supplied from the publisher 28, in which those data contents are organized so as to allow searching by the title, author, article content, publishing date, etc. of the book. For example, for magazine articles related to automobiles, the book data contents are organized so as to allow the search by the automobile manufacturer, publishing date, or automobile model. The member database 48 stores information of each individual member who is able to use the book data contents delivery system. Specifically, it stores information relating to a member, including a member ID, password, name, address, telephone number, etc. The member directory is in the form of a memory region assigned to each member who is requesting book data contents delivery, which may be preliminarily prepared for each member or prepared for each member upon the request for the book data contents delivery made by the user. The member directory 46 can be accessed by the users (members) from all terminals (terminals 12, 16, 18, 22 and 24) by logging-in. It may be referred to as exclusive folders or boxes for the individual users (members) provided in the server computer 10. Logging-in to the member directory is accomplished by entering the ID and user password previously assigned to each user (member). Then, the personal member directory can be accessed from any terminal at any time by a user who accesses the server computer 10 and inputs the appropriate ID and password. Thus, when it is necessary to contact a certain user (member) from the control center 10 for some reason, the content of the message may be simply stored in the user's member directory. The user is able to know the contents of the message by accessing the member directory. It is thereby possible to freely access the member directory 46 by simply accessing the server computer 10 from a terminal requiring no special software, such as a known e-mail software, and no additional e-mail addresses.

The process may be explained in more detail as follows. That is, when accessing the member directory 46 of the server computer 10 using the terminal 12, a browser associated with terminal 12 serves to display the web page of the server computer 10. The web page contains a link for accessing the member directory 46, and by clicking the link and subsequently entering the ID and password, the contents of the member directory are displayed in a suitable format, such as HTML format, on the terminal display as a web page.

The controller 42 manages delivery of the book data contents corresponding to the book data contents order request from the user. More specifically, requested book data contents are read out from the magazine article database 44 and subjected to a predetermined processing, after which the processed data contents, i.e., the delivery data contents, are stored in the member directory 46. The delivery data contents stored in the member directory are read out and sent to the terminal according to a further request (delivery request) by the user (member).

In the embodiment described above, the book data contents requested by the member are stored in the member directory as delivery data contents. Meanwhile, according to another embodiment, an identifier used to identify the requested book data contents may be stored in the member directory. That is, the magazine article database 44 may be designed to store the book data contents accompanied with the identifiers for identifying the respective requested book data contents. In this case, the controller 42 reads out the identifiers for the requested book data contents from the magazine article database according to the book data contents order request from the member, and reads out the personal information of the member from the member database 48. Assigned data contents created by assigning the member's personal data contents to the identification code is then stored in the member directory 46. In the case of a further request (delivery request) by the member, the controller 42 reads out the identifier to which the member's personal data has been assigned, reads out the book data contents corresponding to the identifier from the magazine article database 44, and after performing the necessary processing on the book data contents, sends it to the terminal in response to the request that has been made by the member.

The requested book data contents are not immediately transmitted by the controller 42 in response to the order request because of the need to prevent third parties from copying data contents requiring payment. The aforementioned delivery is performed by further considering the need to prevent duplicated accounting when an error occurs during transmission of the request, which demands the user to re-access the data contents again. Moreover, some users may not want to download the data contents in chosen time, but instead later at an arbitrary time point. Further, some users may want to download the data contents into a plurality of terminals. When delivery of the book data contents requires payment, the controller 42 requires the user to carry out prescribed settlement steps, and then processes the corresponding book data contents to be stored in the member directory 46 after determining that the payment procedure has been completed.

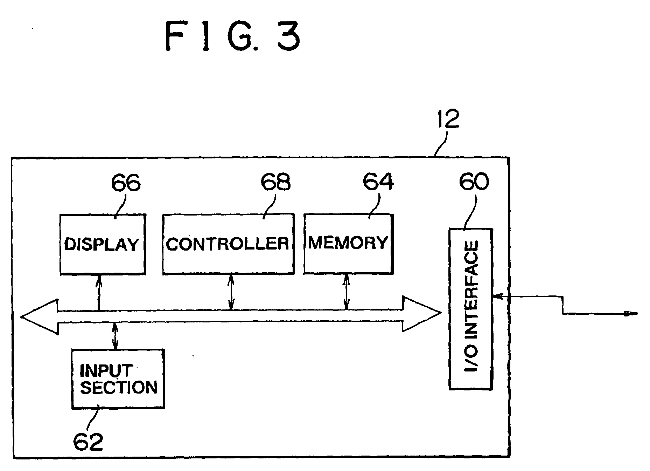

Fig. 3 is a block diagram showing the structure of the terminal 12. Each structure of the other terminals 16, 18, 12 and 24 is essentially the same. The terminal 12 is composed of an input/output (I/O interface) portion 60, an input section 62, a memory 64, a display 66 and a controller 68. The input section 62 serves to input the user's book data contents order and delivery requests. Input section 62 may be formed as a keyboard or touch panel buttons displayed on a screen of display 66. The user's personal information, such as ID and password, is also input through the input section 62. The controller 68 displays the web page etc., sent from the server computer 10 using predetermined software, such as a conventional browser and associated software, stored in the memory 64, and sends the book data contents order request to the server computer 10. When relevant book data contents are sent from the server computer 10 in response to a delivery request, the book data contents are received and stored in the memory 64, and predetermined display software serves to display the stored book data contents on the display 66. When member directory data information has been sent from the server computer 10 in response to an access request by a user, it displays the member directory data. The member directory data information is preferably displayed in a list format. When a plurality of book data content sets for delivery are present in the member directory 46, the listed sets of book data contents may be displayed. Since the book data contents are stored in the member directory 46 after having been subjected to the predetermined processing depending on the order request and completion of payment made by the user, the list present in the member directory 46 and displayed on the display 66 of the terminal represents a book data list indicating the state in which payment has been completed by the user and may be delivered by the server computer 10.

It is preferable to provide each of the terminals 16, 18, 22 and 24, with a memory, such as memory 64, for storing the book data contents sent from the server computer 10, which can be an internal or external storage device, such as a memory within the terminal or a removable and mobile memory medium such as a floppy disk, CD-ROM or the like. This makes it possible to store the book data contents downloaded from the server computer 10 in a mobile storage medium carried by the user.

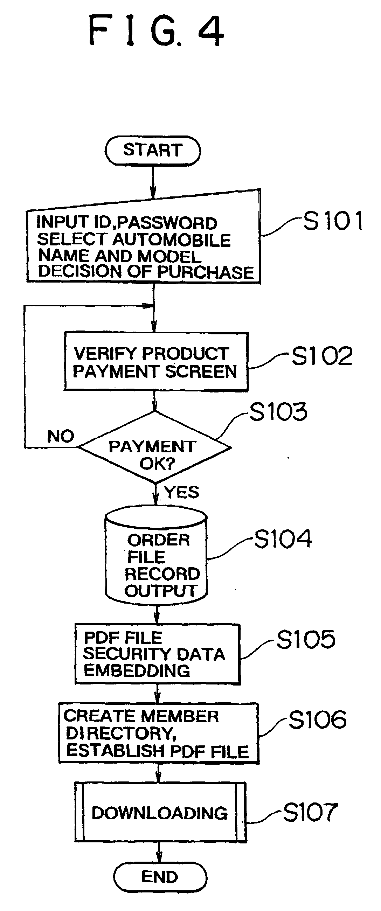

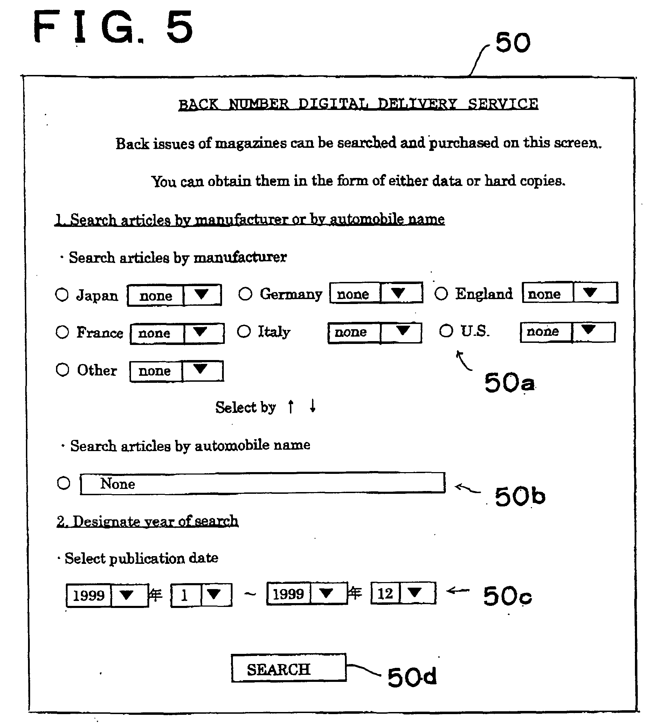

Fig. 4 is a flowchart for a process of book data contents delivery according to an exemplary embodiment of the invention. The process starts and advances to step S101 where a user (member) enters an order request of book data contents to the server computer 10 using the terminal 12 or one of the other terminals 16-24. Specifically, at step S101, the ID or password of the user (member) is inputted, and the contents specifying the book data being ordered, such as the name and model of an automobile in the case of an automobile magazine article, are selected, after which a purchase request is sent Further details of Fig. 4 will be described after the following reference to exemplary screen displays in Figs. 5-7 are described.

Fig. 5 shows a screen 50 displayed on the terminal 12 or terminals 16-24 for the routine executed in step S101 of Fig. 4. This screen can be seen, for example, through a browser of the terminal to display the web page sent by the server computer 10. In addition to the headings for the book data contents delivery service, there are also displayed the input options for specifying the book data contents to be delivered. This example shows options 50a that allow magazine article searching by automobile manufacturer, options 50b that allow automobile name searching, and options 50c for designating a publication date. The options 50a that allow searching by manufacturer incorporate the manufacturers of each country in a pull-down menu such that the user may select the manufacturer of any country. This may apply to the search by the automobile name, search by the country of publication and the like. The user can specify the required book data contents by these options. After inputting the necessary data for the input options 50a-50c, a search button 50d at the bottom of the screen is clicked to send the search data to the server computer 10. At the server computer 10, the magazine article database is searched based on the search data sent from the terminal, and book data contents corresponding to the search conditions are returned to the terminal.

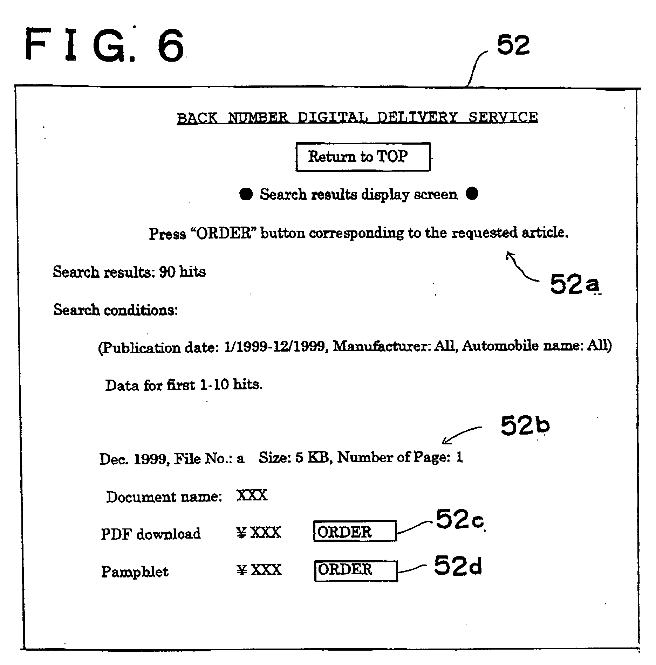

Fig. 6 shows a screen 52 displayed on the display terminal that has received the data from the server computer 10. In addition to the headings, there are also displayed options 52a of the search conditions inputted by the user, and options 52b of specific information on the book data hit by the search conditions. The specific information on the book data contents includes, for example, the publication date, file number, data size and number of pages of the book data contents, as well as the automobile names cited in the article and the titles of the articles. Options 52c and 52d for selection of the method for sending the specified book data contents are also displayed on the screen 52. In this example, two options are displayed, an option 52c requiring downloading of the specified book data contents from the server computer 10, and an option 52d requiring the data contents delivery in the form of a pamphlet. An "ORDER" button is added to the respective options, allowing selection of the method. The format of the content delivery other than "downloaded data" or "pamphlet" may of course be appropriately provided, or it may be limited to the "downloaded data" alone. When the "pamphlet" is selected, for example, the server computer 10 sends the specified book data contents to the distribution center 30, and the book data contents are prepared at the distribution center 30 in pamphlet form and delivered to the user. The delivery information for the user may be obtained from the member database 48 of the server computer 10.

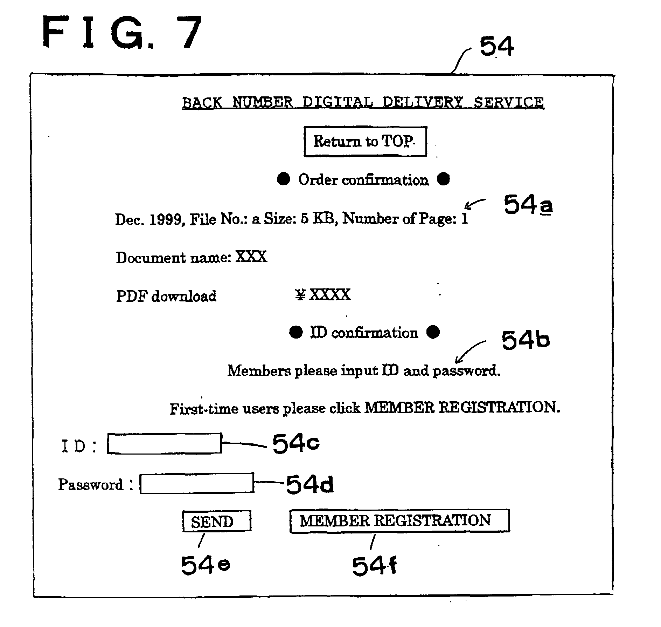

When the user selects the "downloaded data", the following process is executed. Fig. 7 shows a screen 54 sent from the server computer 10 and displayed on the display terminal, for a case where the user has selected the "ORDER" button for downloading. An option 54a is displayed for confirmation of the user's order information, and an option 54b is displayed for confirmation of the user. The user confirmation option includes an ID input option 54c, a password input option 54d and a button 54e to send them, and the user inputs his/her own ID and password and clicks the send button in order to send bis personal data to the server computer 10. When the user is a non-member who has no ID or password, a button 54f is preferably displayed to send the user to a member registration screen, allowing member registration on the designated screen. This process completes the delivery request by the user.

Returning to Fig. 4, when the user inputs the user's personal data such as ID and password and sends them to the server computer 10, the server computer 10 compares these personal user data with the member data stored in the member database 48. If they match, the process advances from step S101 to step S102 where the display switches to a designated payment screen. The payment screen may allow the user, for example, to input a credit card number. Flow then advances to step S103 where the server computer 10 appropriately verifies the credit card number that is sent to effect payment. For this embodiment, as the payment may be made through an arbitrary method, a known payment method (including electronic payment) may be used. Payment may also be made by printing out the data relating to the purchase of the book data contents from the terminal. (including the cost), and making payment at such location as a convenience store, bank, post office or the like, based on the printed data contents. Then the data regarding the payment may be sent to the server computer 10 from the location. Once the server computer 10 determines that the payment by the user has been properly made, flow advances from step S103 to step S104 where the process begins delivery preparation with respect to the specified book data contents.

The delivery preparation in step S104 is carried out in the following way. First, the controller of the server computer 10 creates a record of the order file. The order file record serves to record the fact of the purchase by the user (member). For example, it records the user ID and product ID (book data), the price, method of payment, purchase date, etc. The output of the record may also be omitted from the order file, of course. Flow then advances to step S106 where the controller then reads out the corresponding book data contents stored in the magazine article database and creates a copy of it. The personal data of the requesting user are embedded in the created copy to create the delivery data contents. The book data contents may be created in PDF format, for example, which is suitable for electronic delivery, and the user's personal data is embedded in the book data in PDF format.

From step S105, flow advances to step S106 where the delivery data created in S105 is stored in a corresponding member directory 46, which can be a private folder within the directory for the particular member/user/requester. If no directory has yet been created for the requesting user after adding the user's personal data including security data to the book data contents to create the delivery data contents, the controller creates a new directory for the user in step S106 and stores the delivery data created in S105 in the corresponding member directory. From step S106, flow advances to step S107 where the delivery data contents stored in the member directory 46 are sent to the terminal from which the user has made his/her further delivery request, and downloaded. The storage period for the delivery data contents in the member directory may be unspecified, but it is preferably limited to a specified period, with the controller 42 deleting the delivery data contents after the specified period has ended. This can prevent the data contents capacity from being excessively increased in the member directory.

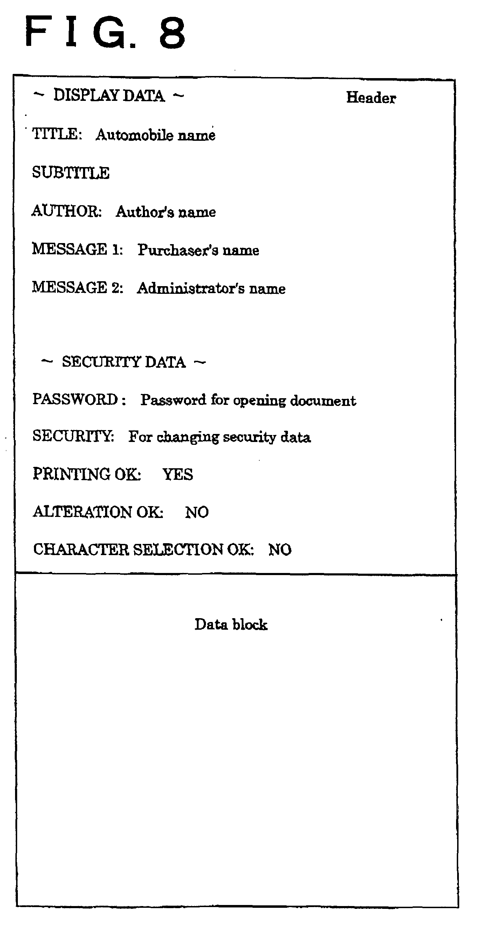

Fig. 8 shows an example of formatting instructions for book data contents in which prescribed data contents have been embedded, i.e. delivery data, in step S105. The personal data of the requesting user is added to the header of the PDF file, and more specifically, the data for titles, subtitles, author, purchaser and the administrator of the server computer 10 are added as display data. Additionally the password for opening the document, the password for changing the security information, a flag allowing or not allowing printing (printing flag), a flag allowing or not allowing alteration (alteration flag) and a flag allowing or not allowing character selection (character selection flag) are provided as security data. Addition of the name of the user as the purchaser is added as display data, and the password for opening the document, which may be the same as the personal password of the user, can effectively prevent illegal copying. The-data in PDF format may be displayed, for example, through Acrobat software by Adobe Systems.

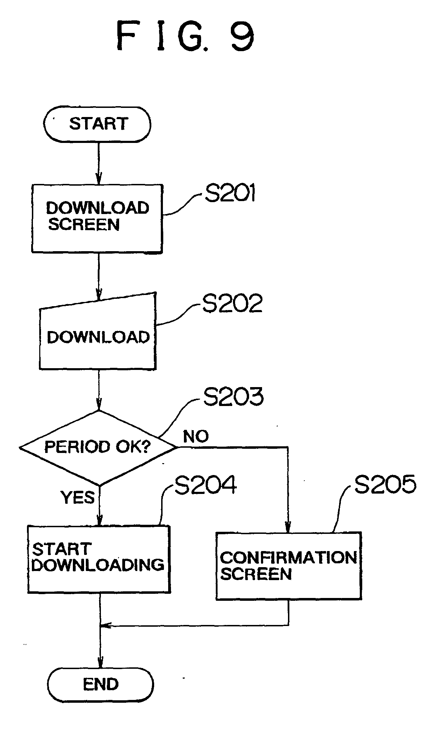

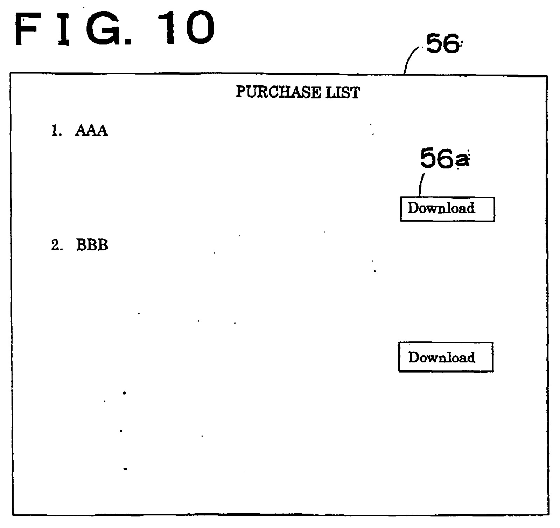

Fig. 9 shows a flowchart of download processing for delivery data contents stored in a member directory. First, in step S201 the server computer 10 displays the download screen on the terminal corresponding to the terminal from which the request was made. This download screen is specifically a list of delivery data contents stored in the member directory. It is displayed when the user performs the log-in procedure, i.e., inputs the user ID and password, and the server computer 10 determines the match between the inputted ID and password, and the data contents stored in the member database. Fig. 10 shows a display screen 56, indicating that payment has been completed, on which the book data contents in a deliverable state is displayed in a list format. As already explained, the data of the member directory may be written in HTML format, and it can be sent by HTTP protocol from the server computer 10 to be displayed in the browser of the terminal. When the member directory contains multiple units of delivery data contents, i.e., multiple units of book data contents, all of the book data titles are displayed and a download button 56a is displayed for each book data unit. The user can view this screen to easily check which book data contents have been purchased and which book data contents can be downloaded. It is also preferred to display the downloadable period for each unit of book data contents.

Referring back to Fig. 9, when the member directory is displayed, the user clicks any one or more of the download buttons in step S202, and the request is sent to the server computer 10 from the terminal, and the server computer 10 receives the delivery/download request, reads out the book data contents stored in the member directory and sends it to the terminal or any other specified location in the network, such as another computer. Alternatively, the book data contents corresponding to the book data identification code stored in the member directory may be called from the magazine article database and the relevant book data contents may be transmitted to the user's terminal. That is, for actual delivery of the delivery data contents to the user, the user accesses the member directory 46 and sends out a delivery/download request, and therefore the accessing of the member directory and the delivery/download request constitute a second delivery request, which is separate from the previous order request. When this second request (delivery request) has been made, the server computer 10 may immediately deliver the delivery data contents in the member directory to the user's terminal. According to this embodiment, however, the delivery data contents are created first for sending to the terminal, and then it is determined in step S203 whether a given time period (for example, 2 weeks) has passed. If the delivery request is made within that given time period the process advances to step S204 and the controller of the server computer 10 sends the requested delivery data contents to the user's terminal. If the given time period has already passed, flow advances to step S205 where a verification screen explaining the expiration is displayed on the user's terminal. Delivery data that has passed the given time period are preferably deleted or inaccessible from the member directory, and therefore are also deleted from the list screen shown in Fig. 10 and are no longer available for selection. However, because this book data are the data content that have been created after payment, they are preferably shown in the list for verification by the user.

Book data contents whose delivery has been completed may also be deleted after delivery, or may be stored in the member directory for a given time period. In the latter case, the user can redownload the book data contents from another terminal (for example, terminal 16) after having downloaded them from terminal 12.

When the delivery data contents are sent (downloaded) from the server computer 10 to the terminal, the delivery data contents are received at the user's terminal and stored in a memory. The book data contents can then be retrieved and displayed using designated display software, such as Adobe Acrobat Since the delivery data contents also contain the user's personal data including security data, the display software also interprets and displays these added data when displaying the book data contents.

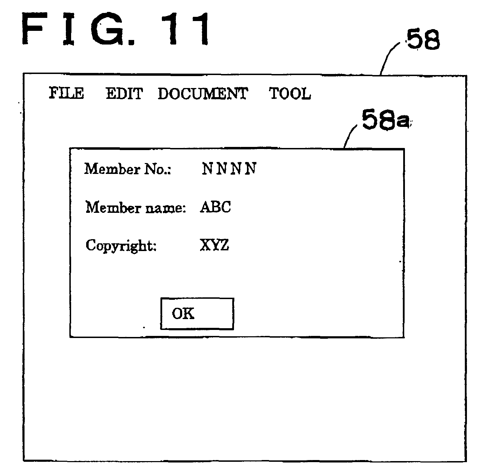

Fig. 11 shows an example of a display screen 58 on which delivered book data contents are displayed in PDF format. An alarm screen 58a is displayed based on the data contents including the security data contained in the header. The alarm screen includes the user's personal data added to the book data contents, and in the Figure, the member ID, member name and author are displayed. When a password is included as security data, the screen requesting password input is also displayed as an alarm screen. When the user inputs his/her personal password at the password input screen, the display software reads in the data and displays the book data contents.

Thus, when an order request is made according to this embodiment, the controller 42 of the server computer 10 copies the book data contents, adds the user's personal data and stores them in the user's personal directory 46, and the user logs into the member directory 46 and sends a delivery/download request for delivery of the book data contents. The following effects may therefore be exhibited. Specifically, since the delivery data contents are stored in the member directory 46, the user can download the book data contents at any desired time, and even if a channel problem occurs during downloading, the member directory 46 may simply be reaccessed at another time for downloading. Therefore the procedure can be simplified. Furthermore, since the book data contents are stored in the member directory of the server computer 10 for downloading when necessary, there is no risk of leakage of the user's personal information (e-mail address, etc.) to third parties, and the downloading may be accomplished using a terminal different from the one that has sent the delivery request That is, the method of usage may be formed of sending the delivery request and completing payment from terminal 16 installed in a commercial location (such as a convenience store), and then downloading the necessary book data contents using a terminal 12 at home after the book data contents have been stored in the member directory 46.

The same effect may be achieved in the aforementioned embodiment in which relevant data contents are created by assigning an identification code for the book data contents to personal data and storing the relevant data content in the user's personal directory. According to this embodiment, when the user logs into the directory and sends a download request, the controller reads out the book data contents corresponding to the identification code based on the identification code stored in the user's personal directory, and sends the corresponding book data contents.

Embodiments of the present invention have been explained above, but the invention is not limited to these illustrated embodiments and various modifications may be made within the scope of the concept of the invention. For example, the network connecting the computers may be a telephone line or digital line or even a satellite connection, and it may be a wire link or wireless link. The term "computer" includes any data processing device including input means, output means and processing means, and particularly the term "terminal" includes portable data terminals and household electric appliances with data processing functions. The protocol for data communication between the server computer 10 and the terminal is not limited to HTTP, and the data format is not limited to HTML but may be SGML, XML, JAVA or the like. Also, the book data format is not limited to PDF but may be any format used for publicly known applications. Moreover, although the embodiments described above were explained with the assumption that the user purchases literature, the invention is not particularly restricted to literature and book data contents, but also applies to any merchandising commodity such as magazines, news, music and the like that can be acquired and purchased online by a user.

As explained above, the present invention allows book data contents to be reliably delivered in response to various requests by a user.

A computer in a control center (10) is connected via a user terminal (12). Merchandise data contents of magazine articles supplied by publishers (28), etc. are stored in a server computer in the control center (10) and when a request for delivery of merchandise data contents is made from a terminal (12), the server computer duplicates the merchandise data contents stored and creates delivery data contents by adding user-specific data. Delivery data contents are stored in a directory (46) assigned for each user (member). When a user requests a download, the server computer reads out the delivery data contents stored in the member directory (46) and transmits it to a terminal (12). By this, merchandise data contents are securely distributed to users.

## Claims

1. A system which uses a computer network (14) connected by communication lines to distribute merchandise data contents characterized by comprising:
a first computer (10) which stores merchandise data contents in a memory thereof based on an order request to distribute said merchandise data contents placed for a specific requester at a second computer (12),
in that said first computer (10) comprises:
an input/output interface (40) that receives the order request from said second computer (12) for said merchandise data contents;
a controller (42) that creates relevant data contents with respect to the requested merchandise data contents received from the second computer (12), assigns requester-specific data contents to said relevant data contents, and creates assigned delivery data contents.

2. The system according to Claim 1, characterized in that:
said relevant data contents are duplicated data contents of the merchandise data contents, and
said assigned delivery data contents are data to be distributed to another computer in the computer network (14).

3. The system according to Claims 1 or 2, characterized in that said controller (42) controls transmission of said delivery data contents through said input/output interface (40) to said another computer.

4. The system according to any one of Claims 1 to 3, characterized in that:
said first computer (10) further has a memory and said delivery data contents are stored in a memory space (46) within said memory assigned to the specific requester, and
said controller (42) reads out said delivery data contents from the memory space (46) assigned for said requester to transmit said delivery data contents through the input/output interface (40) to said another computer according to a delivery request from said second computer (12).

5. The system according to Claim 4, characterized in that said first computer (10) further comprises means for judging matches between specific data contained within the delivery request and said requester-specific data assigned for said relevant data contents prior to transmission of said delivery data contents to said another computer.

6. The system according to Claim 4, characterized in that said first computer (10) further comprises means to judge a length of time that has elapsed from the time said delivery data content was created and said first computer (10) transmits said delivery data contents to said another computer according to said elapsed time.

7. The system according to Claim 4, characterized in that said first computer (10) comprises means for deleting said delivery data contents transmitted to said another computer from said memory space.

8. The system according to Claim 7, characterized in that said means for deleting said delivery data contents from said memory space operates when a length of time that has elapsed from a time said delivery data content was created exceeds a predetermined length.

9. The system according to any one of Claim 1 to 3, characterized in that said first computer (10) comprises:
means (46) for storing said relevant data contents in a memory space assigned to a requester; and
means (44) for recording said merchandise data contents, wherein
said first computer (10), based on relevant data contents stored in a memory space (46) assigned to said requester according to a delivery request from said second computer (12), reads out said merchandise data contents to the relevant data contents and transmits said merchandise data to another computer.

10. The system according to any one of Claims 1 to 3, characterized in that said first computer (10) comprises:
means (46) for storing in a memory space an identifier of relevant data contents; and
means (44) for recording said merchandise data contents,
wherein said first computer (10), according to a delivery request, reads out said merchandise data contents based on the stored identifier and transmits out said merchandise data contents to said another computer.

11. The system according to any one of Claims 1 to 10, characterized in that said merchandise includes books and said merchandise data content is information concerning books.

12. The system according to any one of Claims 2 to 11, characterized in that the second computer (12) in the communication network includes:
an input means (62) for inputting the order request, an input/output interface (60) to transmit the order request, and a display (60).

13. The system according to Claim 12, characterized in that the first computer (10) includes means for transmitting a delivery data contents list to the second computer (12) when a plurality of order requests for a specific requester are received, the display (66) of the second computer (12) displays the data content list, and the input means (62) of the second computer (12) allows selection of a desired one of the plurality of order requests to be delivered.

14. The system according to any one of Claims 2 to 13, characterized in that the another computer is the second computer (12).

15. A delivery device, which transmits merchandise data contents to a requester according to an order request from a terminal device connected to a communication network (14), characterized by comprising:
a first memory space (44) that stores said merchandise data contents;
means (42) for creating relevant data contents related to said merchandise data contents according to an order request from said terminal device;
means (42) for assigning requester-specific data contents to said relevant data contents and for creating assigned data contents; and
a second memory space (46) that stores said assigned data contents.

16. The delivery device according to Claim 15, characterized in that
said relevant data content is duplicated data contents of said merchandise data contents, and
said assigned data contents is data contents to be distributed to a second computer (12).

17. The delivery device according to Claims 15 or 16, characterized by further comprising means (42) for reading out said delivery data contents from said second memory space (46) and for transmitting said delivery data contents to a terminal within the communication network (14).

18. The delivery device according to any one of Claims 15 to 17, characterized in that a separate second memory space (46) is prepared for each said requester.

19. The delivery device according to any one of Claim 15 to 18, characterized by further comprising means (42) for transmitting a data contents list to the terminal device when a plurality of said delivery data contents exists for the requester.

20. The delivery device according to Claims 17 or 19, characterized by further comprising means (42) for judging matches between the content of a delivery request from said terminal device and said requester-specific data contents when said delivery data content is transmitted by said means for transmitting.

21. The delivery device according to Claims 17 or 19, characterized in that said means (42) for transmitting said delivery data contents only when a length of time that has elapsed since the order request is within predetermined period.

22. The delivery device according to Claims 17 or 19, characterized by further comprising means for deleting said delivery data content from said second memory space (46) when said means (42) for transmitting transmits said delivery data contents.

23. The delivery device according to Claims 15 or 16, characterized by further comprising:
means for storing in the second memory space (46) an identifier of relevant data contents; and
means for recording said merchandise data contents in the first memory space (44),
wherein said delivery device reads out said merchandise data content from the first memory space (44) based on the stored identifier and transmit said merchandise data contents to a terminal in the communication network.

24. A method to distribute merchandise data contents using a computer network connected by communication lines, characterized by comprising:
a step (S101) of receiving an order request at a first computer (10) in the network from a specific requester requesting merchandise data contents;
a step (S106) of duplicating requested merchandise data contents;
a step (S106) of preparing delivery data contents for the specific requester by adding requester-specific data to the duplicated data contents; and
a step (S106) of holding the delivery data contents until a subsequent delivery request for delivery is received.

25. The method according to Claim 24, characterized by further comprising a step of distributing said delivery data contents to another computer according to the delivery request, which is independent from said order request.

26. The method according to Claims 24 or 25, characterized by further comprising steps of:
storing the prepared delivery data contents in a memory space (46) assigned to said specific requester,
reading out said delivery data contents from the assigned memory space (46) according to said delivery request, and
distributing said delivery data contents to the specific requester.

27. The method according to Claim 26, characterized in that said delivery data content is read out from said memory space (46) and distributed when requester-specific data included in said delivery request and said requester-specific data within said delivery data contents match.

28. The method according to Claim 26, characterized in that said delivery data content is read out from said memory space (46) and distributed if a length of time that has elapsed between said order request and said delivery request is within a predetermined period.

29. The method according to Claim 26, characterized by further comprising a step of outputting a delivery data list stored in said memory space (46) to a requester.

30. The method according to any one of Claims 24 to 29, characterized in that said requester-specific data held within said delivery data contents includes data prohibiting duplication of said merchandise data contents.

31. The method according to any one of Claims 24 to 29, characterized in that said step of preparing said delivery data contents is executed after settlement of payment by said requester for said merchandize data contents.

32. The method according to any one of Claims 24 to 29, characterized in that the requester-specific data includes a password.

33. The method according to any one of Claims 24 to 32, characterized by further comprising a step of storing said duplicated merchandise data contents in a memory space (46) assigned for merchandise data contents.

34. The method according to any one of Claims 24 to 33, characterized in that when a plurality of order requests for a specific requester are received, the method further comprises a step of transmitting a delivery data contents list to the second computer (12), and upon receipt of a selection by the second computer (12), the selected order request is delivered.
